# EUROPEAN PATENT APPLICATION

(11) **EP 2 854 334 A1**
(43) Date of publication of application: **01.04.2015**
(21) Application number: 13186685.7
(22) Date of filing: 30.09.2013
(51) Int. Cl.: H04L 12/24, H04L 12/26

(54) **Communication network quality monitoring system**

(71) Applicant: Accanto Systems Oy, 15140 Lahti (FI)
(72) Inventor: Karvanen, Jukka, 15170 Lahti (FI); Multanen, Jarkko, 15900 Lahti (FI)
(74) Representative: Berggren Oy Ab

(57) **Abstract**

The aim of the invention to provide a quality monitoring system that can identify monitored network objects with faults that have the greatest effect to the usability of the communication network. So the use of capacity and importance of use of these elements is higher than in other monitored network object. Therefore it is important to repair these elements faster than the other elements. Also the maintenance should keep these elements in good condition. Therefore it is good practice to prioritize maintenance actions.

## Description

### Field of technology

The present invention relates to systems that monitor faults in a communication network. The communication network is for example telecommunication network or datacommunication network. The communication network can be wireless or fixed network.

### Prior art

Different types of faults may occur in the communication networks. A single fault can, for example, be an unsuccessful telephone call or communication with an internet service provider. Telephone calls and data communication connections are called events. In order to track the faults network data are usually collected in two alternative ways namely by using performance management (PM) counters in network elements or by using passive probes that monitor network traffic.

Network designers and engineers have used the PM systems that collect statistics from the network elements through network element vendor's management systems (OSS). This information indicates the volume of the traffic and faults noticed in the traffic of various network resources.

The probe systems gather traffic information by monitoring the actual traffic events and generate data records corresponding to network transactions. In addition the probe based systems can calculate similar statistics from the event data than the network elements (PM). The difference between the PM data and probe generated data is that an actual user that generates the traffic can be detected from the probe based data.

The complexity of the modern communication networks is increasing all the time. The usage of the network is increasing and new technologies enable operators to offer more advanced services and better performance to customers. Because the communication network may include a number of different devices of different manufactures for different communication technologies, the fault monitoring systems may have difficulties in monitoring the whole network. Local knowledge maybe needed to solve fault situations.

The known fault monitoring systems and quality monitoring systems highlight the areas and the network elements having the biggest amounts of the failures. However this may not give a true picture of how seriously the network element or elements are affected by the faults. For example, repeating problems of a single end user or a device can bias the fault data.

### Short description of invention

The aim of the invention to provide a fault monitoring / quality monitoring system that can identify monitored network objects with faults that have the greatest effect to the usability of the communication network. So the use of capacity and importance of use of these objects is higher than in other monitored network object. Therefore it is important to repair these elements faster than the other elements. Also the maintenance should keep these elements in good condition. Therefore it is good practice to prioritize maintenance actions.

The inventive quality monitoring system of a communication network comprises a collecting unit having at least one interface unit to receive measurement data from the network, a processing unit to process the measurement data, and an output unit for maintenance persons to provide access to the quality monitoring system. The measurement data contains fault information of network elements. The collecting unit is also arranged to receive a user specific data and active user specific event data. The processing unit is arranged to utilize the user specific data and the active user specific data to allocate faults in said measurement data into at least two segments. The processing unit is further arranged to have a weight factor for each segment, and to calculate fault impact value to each monitored network object by using said weight factors and number of faults in each segment. The monitored network object can be a single network element or a group of several network elements, or a virtual network element. The virtual network element is an logical structure that does not need to exists physically.

### List of figures

In the following, the invention is described in more detail by reference to the enclosed drawings, where
- Figure 1: illustrates an example of a mobile communication network,
- Figure 2: illustrates an example of an inventive system, and
- Figure 3: illustrates an example of known information of monitored network objects having faults,
- Figure 4: illustrates an example of how the invention finds the monitored network objects having the most relevant faults,
- Figure 5: illustrates an example of information of the monitored network objects having the most relevant faults.

### Description of the invention

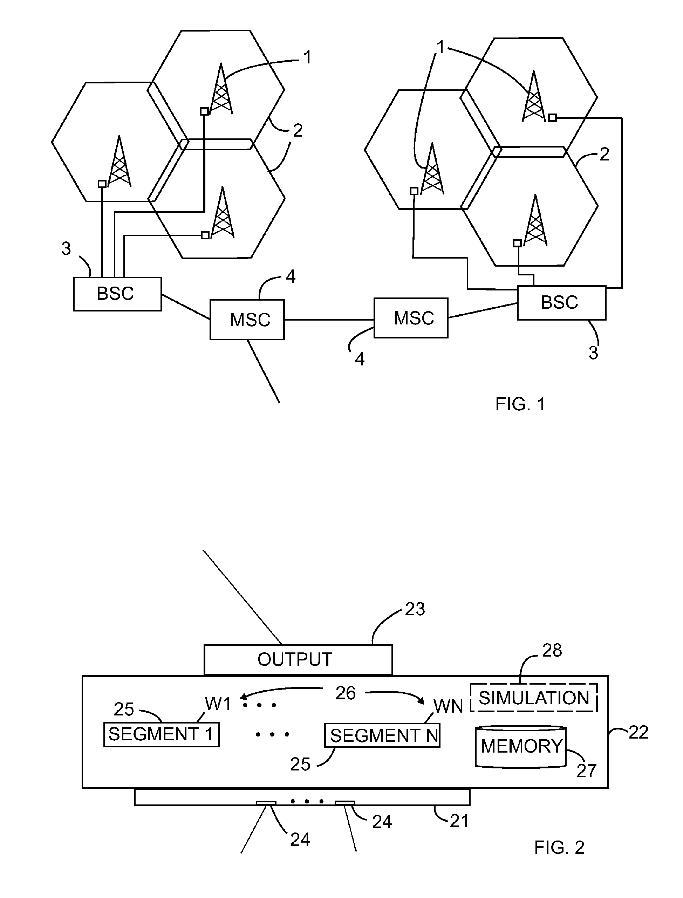

Figure 1 illustrates an example of a known mobile communication network. The network contains base transceiver stations 1 that provide a coverage area 2 at a particular frequency. The base transceiver station and the coverage area together are called cell. The coverage areas of the adjacent cells overlap usually. It is worth mentioning that the base transceiver station with another frequency provides another cell that may physically cover the same area as the cell running at a different frequency.

A group of the base transceiver stations are connected to a base station controller BSC 3 that in turn is connected to a mobile switching centre MSC 4. The mobile switching centres can be connected to other mobile switching centres and other parts of the communication network. The measuring probes can, for example, be connected to communication lines between the base station controller. and the mobile switching centre.

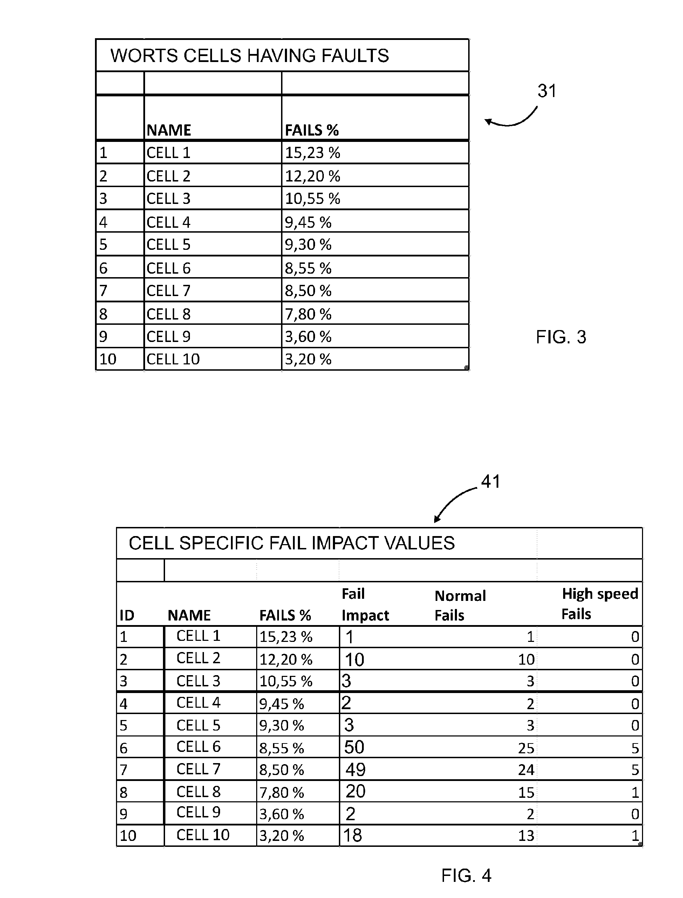

A network element (or monitored network object) can, for example, be a single cell. The network elements send performance management data to network management system that includes also a quality monitoring system. In case of a mobile communication network, like in Figure 1, fault events occur mainly at the edge of the cell where the coverage areas of the adjacent cells overlap. The reason may, for example, be that the power of the other base transceiver station of the other cell is too weak, in which case the power should be increased. The quality monitoring system can identify the cells having the greatest number of faults. The fault can, for example, be congested call, failed call or dropped call. Figure 3 illustrates a prior art example of the identified sells having the worst fault percentages. As can be seen Cell 1 has the greatest fault percentage, and Cell 10 has lowest fault percentage. The network operator can use the identified cells to allocate repairing actions in order that the network could achieve a normal running conditions. So, by repairing the worst faulted cells first, the network can be used more quickly under normal conditions.

However, the identification of the faulted monitored network objects as showed in an example 31 of Figure 3 may give a biased picture of the situation. For example, a single user may create more fault events than a number of other users, which means that the fault situation in the monitored network object may not be so bad as can be seen from the number of the fault events.

The inventive systems makes it possible to identify the monitored network objects having faults in an different way that takes into account features of the user specific events. For example a usage type of connection (event) gives an indication what connections should be repaired or handled first. The element used for a virtual private network (VPN) connections can be repaired before video stream for example.

Figure 2 illustrates a quality monitoring system of a communication network according to the invention. It comprises a collecting unit 21 having at least one interface unit 24 to receive measurement data from the network, a processing unit 22 to process the measurement data, and an output unit 23 for maintenance persons to provide access to the quality monitoring system. The measurement data contains fault information of network elements. The collecting unit is also arranged to receive a user specific data and active user specific event data. The processing unit is arranged to utilize the user specific data and the active user specific data to allocate faults in said measurement data into at least two segments 25. The processing unit comprises also a memory unit 27 for keeping needed data and configuration information as long as required.

The processing unit is further arranged to have a weight factor 26 for each segment, and to calculate fault impact value to each monitored network object by using said weight factors.

The user specific data contains information about features of communication connection that the user uses. For example, the user may have connection of 1 Mbit/s, 10 Mbit/s or 30 Mbit/s. The user specific data can also contain the activity information, for example, the connections of the user takes over 2 hours on office time vs weekend, or on average, the connection capacity is used actively etc. This kind of information can be obtained from user specific event packages if the technology used in that particular network element provides this information.

The active user specific event data means the real measured events from which the user that created/creates the events can be detected.

So, the user specific data can be seen as a reference value for the connection that the user uses, and the active user specific event data contains real measurement of the current connection.

The segments are different groups wherein the detected faults are allocated. The user specific data and the active user specific data are used for this allocation The active user specific data identifies the user having a current connection and/or faults. The user specific data describes the features of the connection or the failed connection. Different features of the connection or failed connection can be used for the above said allocation.

For example the speed of the connection can be used for the allocation. 1 Mbit/s connections are allocated to Segment 4, 8 Mbit/s connections to Segment 3, 20 Mbit/s connections to Segment 2, and over 40 Mbit/s connections to Segment 1.

Activity information of the user can also be used for the allocation. Activity information may indicate the transmitted packets or signalling activity of the user's connection i.e. event. The connection may be "silent" if the user, for example, forgets the connection to be open. So, connections having very high activity are allocated to Segment 1, high active connections to Segment 2, normal active connections to Segment 3, and low active connections to Segment 4. The activity information can be statistic information.

Several features can also be used together for the allocation. For example, the connections having high activity and high speed are allocated to Segment 1, normal active and high speed connections to Segment 2, normal active and normal speed connections to Segment 3, and normal active and low speed connections to Segment 4.

Therefore a fault may affect to a certain type of event / connection. The types of the events can be used for forming different segments. The faults are allocated to different segments. In other words, the seriousness of the faults can be allocated in this way.

The allocated faults in the segments can be used for identifying a fault impact in a monitored network object. This can be done by using segment specific weight factors. Figure 4 illustrates a simple example 41. The first three columns in the table of Figure 4 are the same as the columns in Figure 3, i.e. they represent the known identification of the cells having faults. Two different segments are used in the example of Figure 2. The segments are named as High Speed Fails and Normal Fails. The column of High Speed Fails shows a number of fails of this segment to each cell. The column of Normal Speed Fails shows a number of fails of this segment to each cell. High Speed Fails is considered to be more important than Normal Speed Fails. Therefore the weight factor of High Speed Fails is five and weight factor of Normal Speed Fails is one. The calculation of Fail Impact contains a cell specific calculation wherein a number of faults of the segment is multiplied by the weight factor of the segment. This is done to the each segment. Then the multiplied faults are summed together to obtain Fail Impact parameter of the cell. This parameter takes into account the importance of the faults in a new way that makes it possible to identify the cells having the most significant faults in light of the whole network. The fourth column in the example of Figure 4 contains the cell specific Fail Impact values. The greater the Fail Impact value is the greater is the impact of the faults in the monitored network object.

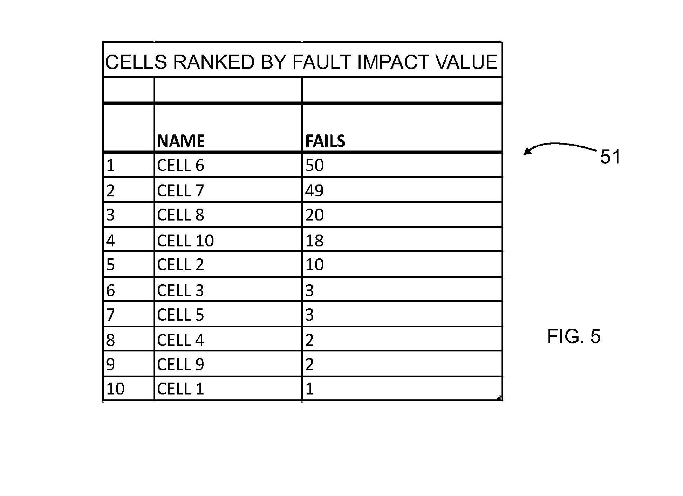

Figure 5 shows the table 51 of the same cells as Figure 3, but now the cells are ranked according to Fail Impact value, which gives a different order than the identification used in Figure 3. When starting the maintenance actions / repairing actions from Cell 6, and not form Cell 1 as the table of Figure 3 suggests, the most relevant parts of the network can be restored faster to a normal state, which means that the usability and capacity of the network as a whole returns faster to the normal state as well. The inventive quality monitoring system can made this kind of ranking or alternatively the system sends the Fail Impact values to an external system that makes the ranking.

The weight factors used can be selected by using desired criteria that can be based, for example, to the knowledge and statistic of the network operator. They may, for example, vary from 1 to 100. The system illustrated in Figure 2 can be configured to certain weight factors, but the weight factors can be reconfigured to other weight factors later.
There are also different ways to calculate the Fail Impact parameter to each monitored network object. In addition to the multiplication of the number of the faults by the segment specific factor, a number of affected users (users having fault in their events) of the segment can be multiplied by the segment specific factor. The results of these multiplications and summed together and further summed with the sums of the other segments. Yet another alternative is to multiple a number of all affected users in the cell with a certain weight factor that is summed with the sum of the segment specific multiplications of the faults. More advanced algorithms like neural algorithms may also be used to calculate the Fault Impact..In addition, the calculation of the fault impact value can contain a multiplication of a number of congested users of the monitored network object with a weight factor.

As can be noted the number of the segments can be selected to be any suitable number. Actually a single user connection can form a segment if so detailed allocation is desired/needed. When a great number of segments exits it is practical that the forming of the weight factors is made automatically.

The inventive system may also comprise a simulation unit 28 to simulate the network conditions after the maintenance actions / repairing have been done according to Fault Impact ranking. In this way it is possible to check how the network returns to a normal state. The simulation can be made step by step i.e. showing the simulated situation after each repaired monitored network object. The simulation reveals possible cases where another ranking than the ranking suggested by the Fail Impact parameter gives a faster or otherwise more desired restoring of the network. It should be noted that the normal condition of the network or monitored network object may contain small amount of faults. When considering the example of Figure 5, the simulation may suggest that the maintenance action should be started form Cell 7 instead of Cell 6.

The collecting unit may receive the user specific data from different sourses. For example Customer Relationship Management (CRM) data or external segmentation and profiling data received by the quality t monitoring system can be utilized for the segmentation. Event may also contain user specific data. As described above, the probe data and the PM data can be received.

The measurement data from the probes contains the active user specific data. This measurement data may be stored to an intermediate storage where it can be processed to statistical data that contains the same information needed by the quality monitoring system. So the statistical data can also be used. In addition the network elements may be capable of generating the similar information as the probes. The capability depends on the technique of the element's manufacture.

If the network is congested, the event of the user trying to use the network does not be visible in the events of the existing Probes, but the amount of these events can be seen in PM statistics. The system can load also the PM counter values to take care of effect of the congestion and other failures happening before the events are visible at the user level. The distribution of the events seen in a monitored network object can be used to allocate the PM counter values to segments for the weighting purposes. So, it is possible that the calculation of the fault impact value contains a multiplication of a PM counter values of the monitored network object with distribution of events, and with a weight factor.

The invention can be utilized in any kind of communication network, not just in mobile networks as showed in Fig. 1.

As illustrated above the invention can be obtained in many different ways.It is evident from the above that the invention is not limited to the embodiments described in this text but can be implemented in many other different embodiments within the scope of the independent claim.

## Claims

1. A communication network quality monitoring system comprising a collecting unit (21) having at least one interface unit (24) to receive measurement data, containing fault information of network elements, from a communication network, a processing unit (22) to process the measurement data, and an output unit (23) for maintenance persons to provide access to the quality monitoring system and notifications to said persons, the quality monitoring system further comprising a memory (27), **characterised in that** the collecting unit (22) is arranged to receive a user specific data and active user specific event data, the processing unit being arranged to utilize the user specific data and the active user specific data to allocate faults into at least two segments (25),
the processing unit (22) being further arranged to have segment specific weight factors (26) for each segment, and to calculate fault impact value to each monitored network object by using said weight factors and the allocated faults in the segments (25).

2. A system according to Claim 1, **characterised in that** the calculation of the fault impact value contains a multiplication of a number of allocated faults with the segment (25) specific weight factor (26).

3. A system according to Claim 2, **characterised in that** the calculation of the fault impact value contains a multiplication of a number of users of the monitored network object being affected by the faults with a weight factor.

4. A system according to Claim 2, **characterised in that** the calculation of the fault impact value contains a multiplication of a number of users of the monitored network object being affected by the allocated faults of the segment (25) with the segment specific weight factor (26).

5. A system according to any of Claim 2 to 4, **characterised in that** the calculation of the fault impact value contains a multiplication of a PM counter values of the monitored network object with distribution of events, and with a weight factor.

6. A system according to any of Claim 1 to 5, **characterised in that** the weight factors in the fault monitoring system are reconfigurable.

7. A system according to any of the Claims from 1 to 6, **characterised in that** the allocation of the faults into the segments (25) is based on the activity information of the events, speed information of the events, duration information of the events, or other useable information.

8. A system according to Claim 7, **characterised in that** the information used to the allocation is CRM or external segmentation and profiling data.

9. A system according to any of the Claims from 1 to 8, **characterised in that** the fault monitoring unit is arranged to rank the monitored network objects having faults according to the fault impact values.

10. A system according to any of the Claims from 1 to 9, **characterised in that** the fault monitoring system comprises a simulation unit (28) to simulate the network conditions if the maintenance actions or repairing actions are made in an order of the fault impact values.

11. A system according to Claim 10, **characterised in that** the simulation unit (28) is arranged to simulate the network conditions after each repaired monitored network object.
